# EUROPEAN PATENT SPECIFICATION

(11) **EP 3 909 433 B1**
(45) Date of publication and mention of the grant of the patent: **30.08.2023**
(21) Application number: 21173930.5
(22) Date of filing: 14.05.2021
(51) Int. Cl.: A23G 1/00, A23G 1/26, A23G 1/28, A23G 3/02, A23G 3/20, A23G 7/00

(54) **TILTING METHOD AND SYSTEM FOR ROTATING MOULDS CONTAINING FOOD PRODUCTS TO BE UNMOULDED, IN PARTICULAR CHOCOLATE PRODUCTS**
KIPPVERFAHREN UND -SYSTEM ZUM DREHEN VON FORMEN, WELCHE LEBENSMITTEL ENTHALTEN DIE ENTFORMT WERDEN, INSBESONDERE SCHOKOLADE
PROCEDE ET SYSTÈME D'INCLINAISON POUR TOURNER MOULES CONTENTANT DES PRODUITS ALIMENTAIRES A DEMOULER, EN PARTICULIER PRODUITS DE CHOCOLAT

(30) Priority: 15.05.2020 IT 202000011269
(43) Date of publication of application: 17.11.2021
(73) Proprietor: Sacmi Packaging & Chocolate S.p.A., 40026 Imola BO (IT)
(72) Inventor: GIARDINI, Giovanni, 40026 IMOLA (BO) (IT); LUMINI, Franco, 40026 IMOLA (BO) (IT)
(74) Representative: Lovino, Paolo

(56) References cited:
- EP-A1- 2 108 263
- EP-A1- 2 246 275
- BE-A- 432 548
- US-A- 5 591 464
- US-A- 5 792 488
- US-A1- 2009 068 329

## Description

### CROSS-REFERENCE TO RELATED APPLICATIONS

This patent application claims priority from Italian patent application no. 102020000011269 filed on 15/05/2020.

### TECHNICAL FIELD

The present invention relates to a tilting method for rotating moulds containing food products to be unmoulded, while the moulds are transferred in a row through a plant that produces such products. In particular, the food products are chocolate products. The invention is set out in the appended set of claims.

### BACKGROUND ART

Generally, the plants for producing chocolate products comprise a series of stations and a transfer system having two parallel transport chains, which are wound on toothed transmission wheels and are operated so as to continuously transport a row of moulds along a path extending through such stations.

In such stations, in particular, the chocolate is first poured into the moulds, is then cooled to be consolidated and, finally, is unmoulded on a conveyor belt which then transfers the products to a packaging plant.

The lateral edges of the moulds (or the lateral edges of mould-holder elements which house such moulds) are hinged to the two transport chains about respective horizontal axes and have a base surface, which faces downwards and runs on two parallel and fixed tracks, at least when the moulds run along the horizontal branches of the aforementioned path. When the moulds have to run along curves about horizontal axes, for example for reversing the direction of advancement, the moulds are accompanied by suitable devices for always remaining horizontal and ensuring that the base surface is always facing downwards.

To unmould the products contained in the moulds, the latter are generally first tilted so that their base surface faces upwards and thus such products can fall onto the aforementioned conveyor belt, for example due to an external vibrating or beating action.

In the known and most commonly used solutions, the transport system is wound on a polygonal-shaped drum, on which several moulds are arranged simultaneously (normally in a number variable between 3 and 7). The face of the mould containing the products to be unmoulded rests on one side of the polygonal shape. In the passage of the mould from this polygonal shape to the conveyor belt, the distance between the products and the belt cannot remain constant. Therefore, if the products tend to detach in advance from the cavities provided in the mould during the tilting, they are still relatively far from the conveyor belt and therefore tend to collide against such belt and to get damaged, having partially exited from and then re-entered such cavities.

Other known solutions, such as those described in US5591464A, BE432548A or US2009068329A1, relate to processes wherein the mould is rotated or tilted after being stopped and released from the transport line.

A need is thus felt to improve the known solutions so as to prevent damage to the products and have greater control over the exit of the products from the moulds and their settling on the conveyor belt, but preventing snags or stops of the transport line.

### DISCLOSURE OF INVENTION

The object of the present invention is to provide a tilting method for rotating moulds containing food products to be unmoulded, in particular chocolate products, which allows fulfilling the need described above in a simple and cost-effective manner.

According to the present invention, a tilting method is provided for rotating moulds containing food products to be unmoulded, in particular chocolate products, as defined in claim 1.

Furthermore, according to the present invention, a tilting system is provided, as defined in claim 4.

Furthermore, according to the present invention, an unmoulding machine is provided, as defined in claim 7.

### BRIEF DESCRIPTION OF THE DRAWINGS

The invention will now be described with reference to the accompanying drawings, which illustrate a non-limiting embodiment example thereof, wherein:
- Figure 1 illustrates a longitudinal sectional view of a preferred embodiment of a tilting system for rotating moulds containing food products to be unmoulded, in particular chocolate products, according to the method of the present invention;
- Figure 2 illustrates a perspective view, with parts removed for clarity, of the tilting system of Figure 1;
- Figure 3 is a different perspective showing, on an enlarged scale, a detail of Figures 1 and 2;
- Figure 4 is a cutaway view of the tilting system, through the section plane IV-IV of Figure 1;
- Figure 5 is similar to Figure 4 and illustrates a detail of Figure 4, on an enlarged scale and from below; and
- Figure 6 is a perspective from a different point of view and with parts removed for clarity.

### BEST MODE FOR CARRYING OUT THE INVENTION

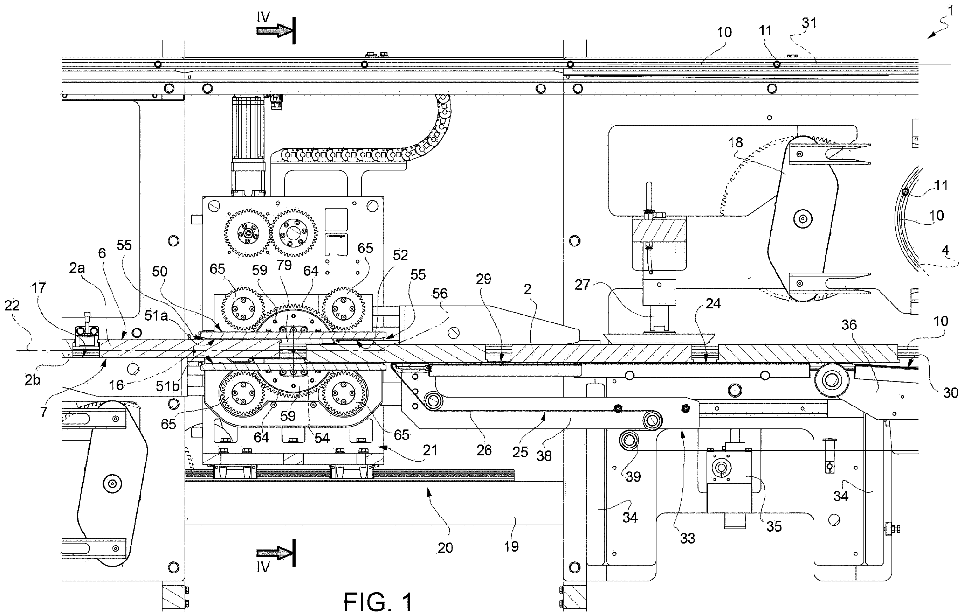

In figure 1, reference numeral 1 identifies, as a whole, an unmoulding machine (partially illustrated), i.e. a machine for unmoulding food products from moulds 2 which are transferred in a row and continuously along a path 4.

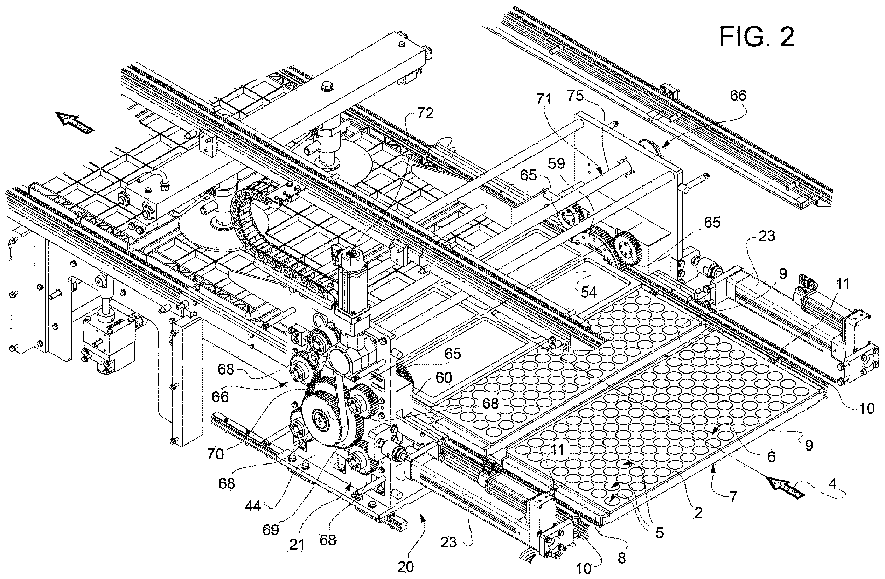

With reference to Figure 2, the moulds 2 are defined by plates or trays, which have a rectangular shape when seen in plan view, and are provided with cavities 5 (partially illustrated) at an external surface 6 thereof (also called "upper surface", as it is in this position for most of the use of the moulds 2). Such cavities 5 house respective food products obtained for example by pouring respective doses of product, for example chocolate, in a preceding station (not illustrated).

On the opposite side with respect to the surface 6, the moulds 2 have a base surface 7 (in particular, provided with ribs), which is connected to the surface 6 by two sides 8 and by two end edges 9, parallel to each other and orthogonal to the sides 8 and to the path 4. According to a variant not illustrated, the sides 8 are coupled to mould-holder elements, which house the moulds and are pulled for transporting the latter along the path 4.

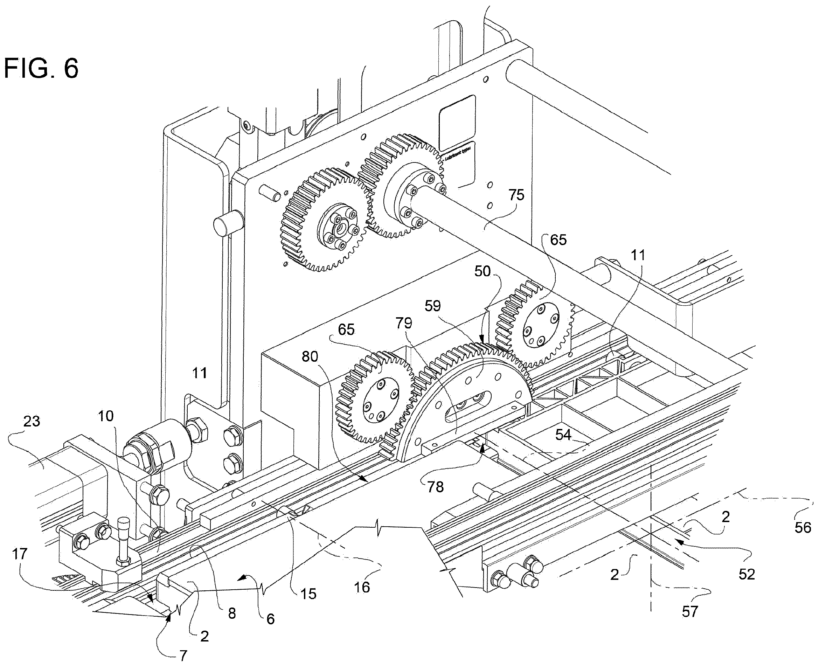

A known type conveyor is provided for transferring the moulds 2: such conveyor comprises two transport chains or belts 10 parallel to the path 4, arranged on the opposite sides of the row of moulds. With reference to Figure 6, the chains or belts 10 comprise a plurality of pins 11 having respective hinge axes which are horizontal and orthogonal to the path 4. Along each of the two chains or belts 10, the pins 11 are spaced apart at a constant pitch, equal to the distance between two adjacent moulds along the row.

For each mould 2, the two sides 8 comprise respective shaped central portions 15 which are aligned with each other along a centreline axis 16 orthogonal to the path 4 and are coupled to each of the chains or belts 10 by means of a respective pin 11. In particular, the central portions 15 have respective circular seats rotatably engaged by the pins 11. The hinge axis of the two pins 11 which pull the mould 2 is aligned with the centreline axis 16 of such mould 2. Simultaneously, each mould 2 has a degree of freedom in rotation about such hinge axis and thus about its own centreline axis 16.

Along the straight branches of the path 4, the base surface 7 rests vertically and slides on two horizontal tracks 17, parallel to each other and arranged laterally, in proximity to the chains or belts 10, i.e. in proximity to the sides 8.

As can be seen in Figure 1, along the curves of the path 4, the tracks 17 are absent, but accompanying devices 18 synchronised with the chains or belts 10 are provided for keeping the moulds 2 horizontal.

The machine 1 comprises a fixed support structure 19 and a tilting assembly 20 having a frame 21 coupled to the structure 19. The frame 21 is arranged along a longitudinal straight branch 22 of the path 4 and can translate with respect to the structure 19 with a longitudinal reciprocating motion under the action of one or more actuators 23 (Figure 2) in an intermediate area of the machine 1, defining a tilting station. This longitudinal reciprocating motion has a forward stroke in a direction concordant with the motion of the moulds 2, and a return stroke, in the opposite direction. In the forward stroke, the actuators 23 are controlled in response to signals from suitable sensors, so as to synchronise the translation of the assembly 20 with the advancement of each mould 2, as will be described also in the following: therefore, a "tracking" type motion is obtained.

The assembly 20 is controlled so as to overturn each mould 2 by 180° (with respect to a fixed external reference system) and, thus, arrange the upper surface 6 thereof with the cavities 5 downwards and arrange the base surface 7 thereof upwards. According to the present invention, the tilting is carried out so as to overturn each mould 2 about its centreline axis 16, using the hinge defined by the pins 11. Specifically, the tilting takes place while the mould 2 continues to be pulled by the two chains or belts 10, while the assembly 20 moves synchronously with respect to the same chains or belts 10.

The tracks 17 are absent in the tilting station to allow the moulds 2 to rotate about the hinge axes of the pins 11. The tilting is carried out while the moulds 2 are transferred along the branch 22 of the path 4, and not along a curve.

Downstream of the tilting station, the machine 1 comprises an unmoulding station, wherein the food products exit vertically from the cavities 5, to rest on an upper surface 24 of a conveyor 25, while the moulds 2 continue to be pulled longitudinally by the two chains or belts 10.

In particular, the surface 24 is defined by a conveyor belt 26.

The coming out of the products from the cavities 5 is obtained by means known techniques, for example by means of beating or vibrating devices 27 arranged above the surface 24.

In particular, the surface 24 comprises: a front area 29, capable of receiving the unmoulded products, below the devices 27; and a rear area 30 which is inclined downwards with respect to the area 29 so as to vertically move the products away from the moulds 2 after the unmoulding. Once the moulds 2 have reached the end of the branch 22, they are transferred to an outlet (not illustrated), for example along a branch 31 of the path 4, parallel and arranged above the branch 22.

The belt conveyor 25 comprises a support frame 33, which slides along a guide 34 with respect to the structure 19 so as to be adjustable in height under the action of a mechanism 35, for example (but not limitedly) of the manual operation type, for finely adjusting the vertical distance between the area 29 of the surface 24 and the moulds 2 that exit the assembly 20.

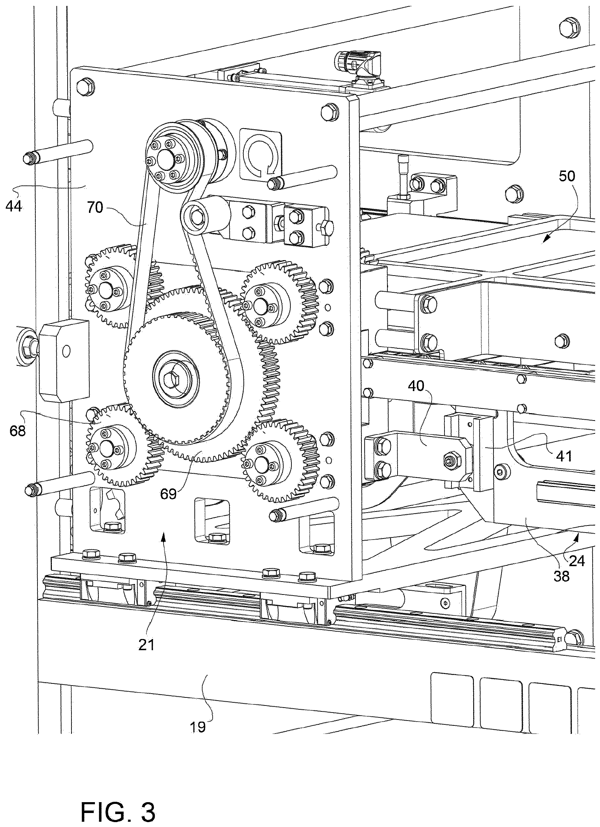

The frame 33 comprises a rear portion 36 and a front portion 38, which slides with respect to the portion 36 longitudinally for varying the length of the surface 24. Simultaneously, the belt 26 is wound on a roller system 39 (partially illustrated and not described in detail) of the type known as "retractable pen" (for travelling at least an S-shaped trajectory section in the lower area of the conveyor 25). Simultaneously, the portion 38 is synchronised with the reciprocating motion of the frame 21 so as to leave a constant empty space between the outlet of the assembly 20 and the beginning of the surface 24. For this purpose, as can be seen in Figure 3, the portion 38 is mechanically linked to the frame 21 in longitudinal direction, for example by means of at least one arm 40. In the specific case wherein the frame 33 is adjustable in height, a degree of freedom in vertical direction is provided between the portion 38 and the frame 21: for example, the arm 40 can slide in a vertical guide 41 carried by the portion 38.

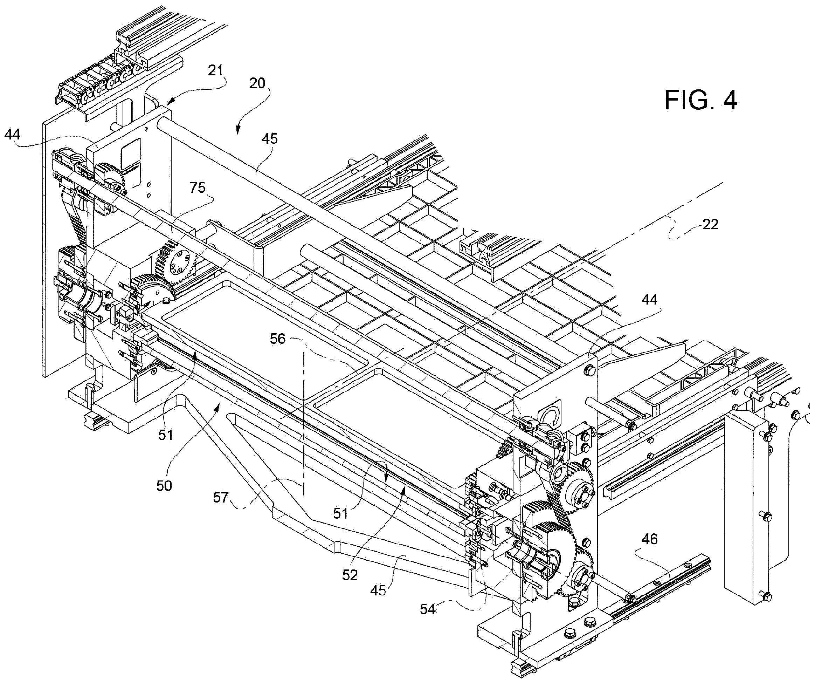

With reference to Figure 4, the frame 21 comprises two lateral support elements 44, which are spaced apart so as to be arranged on opposite sides of the stroke path provided for the moulds 2, are fixed to each other by means of one or more crosspieces 45, and are coupled to the structure 19 by means of respective longitudinal guides 46 parallel to the branch 22 of the path 4.

The frame 21 supports a rotating device 50 having two retention surfaces 51 which face each other so as to define a housing 52 between each other having dimensions such to be able to accommodate a mould 2. The device 50 can rotate with respect to the frame 21 about a rotation axis 54, which is horizontal and orthogonal to the branch 22 of the path 4 and, preferably, coincides with a symmetry axis or a barycentric axis of the housing 52. In particular, the device 50 has an axial symmetry with respect to the rotation axis 54.

The housing 52 has two openings 55 (Figure 1) opposite each other along a crossing axis 56, which is orthogonal to the rotation axis 54, for allowing each mould 2 to enter and withdraw with respect to the housing 52 when the axis 56 is longitudinally oriented, i.e. aligned with the branch 22 of the path 4. When the housing 52 has this orientation, the frame 21 can be transferred by the actuators 23 along the return stroke, thanks to the relative sliding between the device 50 and the row of moulds 2.

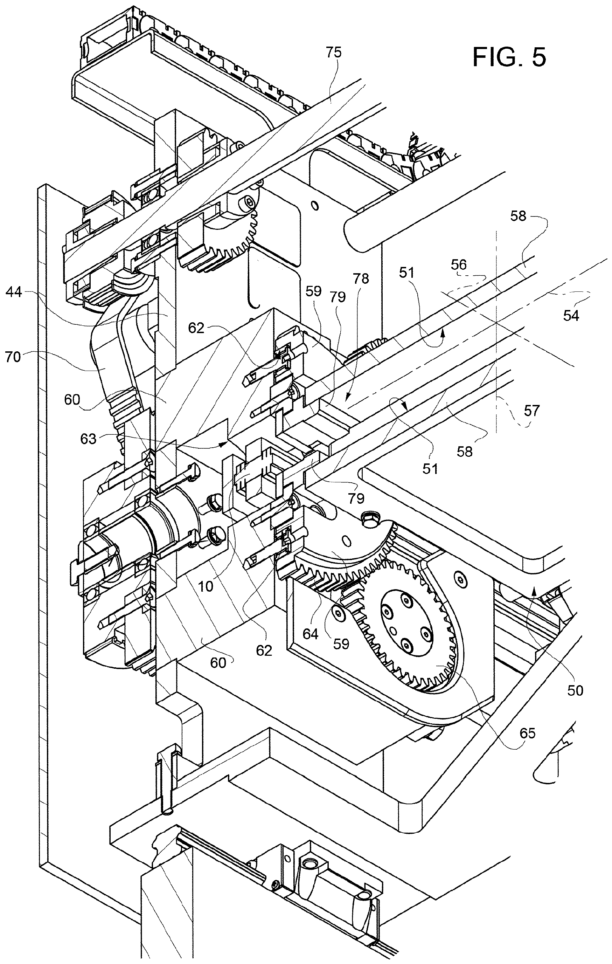

As can be seen in Figure 5, in particular, the rotating device 50 comprises two walls or plates 58, which are spaced apart along a direction 57 orthogonal to the axes 54 and 56, are parallel and define the surfaces 51. Furthermore, for each plate 58, the device 50 comprises two half-moons or half-wheels 59 fixed to the lateral ends of the plate 58.

On each side of the frame 21, the two half-wheels 59 are coupled to respective portions 60 of the element 44 so as to be able to rotate about the axis 54. For example, the half-wheels 59 have respective grooves 62 in an arc of circumference, engaged by bearings carried cantilevered by the portions 60. In particular, at each side of the frame 21, the two portions 60 are spaced vertically from each other so as to define a longitudinal channel 63 through which the corresponding chain or belt 10 passes.

Preferably, the two half-wheels 59 have respective teeth 64 on an external edge thereof which is shaped like an arc of circumference, to be driven in rotation about the rotation axis 54 and be kept in fixed angular positions with respect to each other.

For this purpose, as better visible in Figure 1, on each side of the frame 21 the two teeth 64 mesh with the teeth of at least four satellites 65, which are arranged about the rotation axis 54 in positions such to allow each half-wheel 59 to always be in contact with at least one of the satellites 65, irrespective of the rotation angle.

In particular, as visible in Figure 2, on each side of the frame 21, the four satellites 65 are operated synchronously by a drive device 66 carried by the corresponding element 44 on a side opposite to that where the portions 60 are provided. More particularly, the device 66 comprises four satellites 68 which are coaxial and fixed with respect to the satellites 65; a toothed wheel 69 which rotates coaxially about the rotation axis 54 and meshes with the satellites 68; and a transmission 70, for example of the toothed belt or chain type, which operates the wheel 69.

Preferably, the assembly 20 comprises a transmission 71 which transfers the rotation motion from a single electric motor 72 to the two sides of the frame 21. More in detail, the transmission 71 comprises a rotating shaft 75, which extends between the two elements 44, is parallel to the rotation axis 54, operates both devices 66 and is coupled to the motor 72 by means of gears. Of course, solutions different from the one illustrated can be provided for operating the satellites 65: in particular, the assembly 20 could have several motors synchronised with each other, and acting for example on the wheels 69 (without transmissions 70), instead of having the single motor 72.

With reference to Figure 6 (where the plate 58 arranged above is not shown), the opposite axial ends of the housing 52 are shaped so as to define two guiding areas 78, which are longitudinally aligned with the tracks 17 provided before the tilting station. The guiding areas 78 have dimensions and shape such to support the sides 8 of the moulds 2 in a fixed relative position along the direction 57, i.e. vertically, and simultaneously guide the moulds 2 along the axis 56, i.e. longitudinally. For example, in each of the guiding areas 78, each of the half-wheels 59 carries a longitudinal block 79, for slidingly engaging a recess 80 which extends longitudinally on the sides 8 of the moulds 2.

When the axis 56 is oriented longitudinally and the housing 52 is substantially horizontal, one of the surfaces 51 of the rotating device 50 is arranged at the top, indicated by 51a in Figure 1, while the other is at the bottom, indicated by 51b always in Figure 1. With reference to this figure, at the end of the return stroke and/or the beginning of the forward stroke, the actuators 23 are controlled in response to signals from suitable sensors so as to carry out an alignment step, wherein the rotation axis 54 is made to coincide with the centreline axis 16 of a mould 2a which is leaving the tracks 17 and entering the tilting station. After this alignment, the mould 2a is arranged inside the housing 52 and is thus completely decoupled from the tracks 17 and supported vertically in a fixed position by the projections 79.

At this point, the actuators 23 are controlled for translating the frame 21 along the forward stroke in synchronism with the chains or belts 10. Therefore, along the forward stroke, the rotation axis 54 will continue to coincide with the centreline axis 16 of the mould 2a and with the hinge axis of the two pins 11 which pull the mould 2a.

While this synchronism is maintained, the half-wheels 59 are rotated by 180° about the rotation axis 54 so as to tilt the mould 2a housed in the housing 52, about its centreline axis 16 (i.e. about the aforementioned two pins 11) .

When the mould 2a longitudinally enters the housing 52 due to the relative translation in opposite directions of the frame 21 and of the row of moulds 2, the surface 51a which is arranged at the top progressively covers the surface 6 of the mould 2a. For such purpose, when the housing 52 is oriented longitudinally, i.e. horizontally, the surface 51a which is arranged at the top is vertically distant from the tracks 17 by an amount which preferably approximates in excess the height of the moulds 2.

Preferably, the empty space between the same surfaces 6 and 51a is negligible, therefore, during the subsequent tilting, the cavities 5 are substantially closed by the surface 51a. Therefore, the presence of the surface 51a in a position facing the surface 6, and possibly in contact with the latter, prevents the products from exiting the mould 2a.

In these steps, the surface 51b which is arranged at the bottom does not perform any function, and is positioned so as not to interfere with the longitudinal sliding of the mould 2a through the housing 52.

At the end of the tilting, the surface 51a which was at the top will be arranged at the bottom, in the same position previously occupied by the surface 51b which was arranged at the bottom, and vice versa, thanks to the symmetry with respect to the rotation axis 54. Furthermore, the surface 51a, which was at the top and moved to the bottom, will continue to cover and close the cavities 5 of the mould 2a which has been tilted.

After the tilting, the synchronism between the frame 21 and the chains or belts 10 ends: the actuators 23 are controlled to translate the frame 21 again along the return stroke and then carry out another cycle, on a mould 2b which follows along the row. Simultaneously, the mould 2a which has been tilted will continue to be pulled longitudinally by the two pins 11 thereof, thus automatically coming out of the housing 52 so as to go on the surface 24 of the belt 26, towards the unmoulding station. Thanks to the mechanical constraint between the assembly 20 and the conveyor 25, the horizontal empty space between the area 29 of the surface 24 and the surface 51a (or 51b, alternatively) which has been brought down by the tilting, remains of constant width. Such width is established by design so that it is negligible with respect to the dimensions of the products to be unmoulded, so that the latter do not fall into such empty space. The width of such empty space could be varied by replacing the plates 58 with other plates of different dimensions.

At the same time, after the tilting, the surface 51b (which was at the bottom with reference to the situation shown in Figure 1, and has been brought up) will be ready to cover the surface 6 of the following mould 2b, for closing its cavities 5 with the food products.

From the foregoing the advantages of the tilting method and of the assembly 20 described are apparent.

In particular, the covering of the surface 6 of the moulds 2 and thus the closing of the cavities 5 allows damage to the products contained in the cavities 5 to be prevented. The constraint between the assembly 20 and the conveyor 25 and the height adjustment of the latter also contribute to the same effect.

Furthermore, the proposed solution does not negatively impact the speed and the transfer trajectories of the moulds 2, and is relatively compact.

Furthermore, the proposed solution keeps the distance between the plates 58 and the surface 24 of the belt 26 constant and reduced to a minimum value, ensuring a safe passage of the products on the belt 26.

The proposed solution prevents damage to the products, as it does not have the typical effect of the traditional unmoulding solutions, with the arrangement of several moulds around a polygonal drum, wherein the distance between the mould and the conveyor belt changes in the passage towards the belt.

Finally, it is apparent from the foregoing that modifications and variations can be made to the tilting method and the system, which do not depart from the scope of protection of the present invention, as defined in the appended claims.

For example, as mentioned above, the operation of the satellites 65 could be different from what indicated; and/or the shape and the dimensions of the housing 52 could be different from what shown; and/or for the horizontal translation of the portion 38 of the conveyor 25, rotary motors, actuators or linear motors can be provided, possibly with a transmission, for example of the rack type, instead of providing a mechanical constraint such as the arm 40, and different solutions from that shown can be provided for the translation of the assembly 20, for example with linear motors or with a rack transmission.

## Claims

1. A tilting method for rotating moulds (2) provided with cavities (5) containing food products, in particular chocolate products, to be unmoulded; said cavities (5) being made at an external surface (6) of each mould (2); the method comprising the steps of:
- transferring said moulds (2) in a row along a path (4);
- tilting each mould (2) by 180° with respect to a fixed external reference system, about a rotation axis (54) orthogonal to said path (4), by means of a tilting assembly (20) ;
wherein said external surface (6) is covered by a retention surface (51) during the tilting step;
**characterized in that**
- each mould (2) is transferred along said path (4) by the thrust of a respective pair of pins (11), which are coaxial with each other along a centreline axis (16) of said mould (2) ;
- each mould (2) is rotatable with respect to the corresponding pins (11) about its centreline axis (16);
- said tilting assembly (20) is movable along a longitudinal straight branch (22) of said path (4) with a reciprocating motion, comprising a forward stroke and a return stroke;
- before the tilting step, the method comprises an alignment step wherein the tilting assembly (20) translates along said forward stroke so as to make said rotation axis (54) coincide with said centreline axis (16);
- the tilting step is carried out while said mould (2) is transferred by said pair of pins (11) along said longitudinal straight branch (22), and while said tilting assembly (20) translates along said forward stroke in synchronism with said pins (11), to keep said rotation axis (54) and centreline axis (16) coincident;
- after the tilting step, the tilting assembly (20) translates along said return stroke.

2. The method according to claim 1, wherein, during the tilting step, a negligible or zero empty space is present between said external surface (6) and retention surface (51), so as to substantially close said cavities (5).

3. The method according to claim 1 or 2, wherein, after the end of the translation in synchronism, the moulds (2) move from a rotating device (50) of said tilting assembly (20) over a transport surface (24), while a longitudinal distance is kept constant between said rotating device (50) and said transport surface (24).

4. A tilting system to rotate moulds (2) according to the method of any one of the previous claims; the system comprising:
- a fixed structure (19);
- two transfer chains or belts (10), which are provided with respective pins (11) to push the sides of the moulds (2) and to hinge each mould (2) about a centreline axis (16) of said mould (2); in use, each mould (2) being transferred along a path (4) by the thrust of a respective pair of pins (11), which are coaxial with each other along the centreline axis (16) of said mould (2);
- a tilting assembly (20) comprising:
a) a frame (21) coupled to said fixed structure (19) so as to be movable along a longitudinal straight branch (22) of said path (4), with a reciprocating motion comprising a forward stroke and a return stroke;
b) a rotating device (50) coupled to said frame (21) so as to rotate about a rotation axis (54) orthogonal to said path (4) and configured so as to be crossed by the moulds (2) along a crossing axis (56) and so as to hold each mould (2) along a direction (57) which is orthogonal to said rotation axis (54) and crossing axis (54, 56); wherein said rotating device (50) comprises at least one retention surface (51) capable of covering the external surface (6) of the mould (2) which, in use, engages said rotating device (50), at least during the rotation;
c) at least one motorised drive device (66) to rotate said rotating device (50) when said rotating device (50) is engaged by a mould (2) and when the centreline axis (16) of said mould (2) is aligned to coincide with said rotation axis (54);
d) at least one actuator (23) controlled so as to move said frame (21) along said straight branch (22) and keep said rotation axis (54) aligned with the centreline axis (16) of said mould (2) during the rotation of said rotating device (50), along said forward stroke, while the mould (2) is transferred by the respective pair of pins along said straight branch (22).

5. The system according to claim 4, wherein said rotating device (50) comprises two retention surfaces (51) symmetrical to each other with respect to said rotation axis (54) .

6. The system according to claim 4 or 5, wherein said actuator (23) is controlled so as to move said frame (21) with said reciprocating motion along said straight branch (22) .

7. An unmoulding machine comprising:
- a tilting system according to any one of claims 4 to 6, and
- a conveyor (25) arranged immediately downstream of said tilting system (20) along said straight branch (22) and having an upper transport surface (24) capable of receiving the unmoulded products;
wherein said frame (21) is mechanically linked in horizontal direction to a frame portion (38) of said conveyor (25), so that the length of the upper transport surface (24) automatically varies in response to the displacement of said frame (21) along said straight branch (22).

8. The machine according to claim 7, wherein said conveyor (25) comprises an adjustment device (34, 35) to vary the height position of said frame portion (38) and/or of said upper transport surface (24).

## Patentansprüche

1. Kippverfahren zum Drehen von Formen (2), die mit Hohlräumen (5) versehen sind, die Lebensmittelprodukte, insbesondere Schokoladenprodukte, enthalten, die entformt werden sollen; wobei diese Hohlräume (5) an einer äußeren Oberfläche (6) jeder Form (2) hergestellt sind; wobei das Verfahren die folgenden Schritte aufweist:
- nacheinander Transferieren der Formen (2) entlang eines Wegs (4);
- Kippen jeder Form (2) um 180° in Bezug auf ein festes äußeres Bezugssystem um eine Drehachse (54), die zu dem Weg (4) orthogonal ist, mittels einer Kippanordnung (20);
wobei die äußere Oberfläche (6) während des Kippschritts von einer Rückhaltefläche (51) bedeckt wird;
**dadurch gekennzeichnet, dass**
- jede Form (2) durch den Schub eines jeweiligen Paars von Stiften (11), die entlang einer Mittellinienachse (16) der Form (2) zueinander koaxial sind, entlang des Wegs (4) transferiert wird;
- jede Form (2) in Bezug auf die entsprechenden Stifte (11) um ihre Mittellinienachse (16) drehbar ist;
- die Kippanordnung (20) entlang ihres geraden Zweigs (22) des Wegs (4) in Längsrichtung mit einer Hin- und Herbewegung, die einen Vorwärtshub und einen Rückwärtshub aufweist, beweglich ist;
- das Verfahren vor dem Kippschritt einen Ausrichtungsschritt aufweist, wobei die Kippanordnung (20) entlang des Vorwärtshubs derart verschiebt, dass die Drehachse (54) mit der Mittellinienachse (16) zusammenfällt;
- der Kippschritt ausgeführt wird, während die Form (2) durch das Paar von Stiften (11) entlang des geraden Längszweigs (22) transferiert wird und während die Kippanordnung (20) synchron mit den Stiften (11) entlang des Vorwärtshubs verschiebt, um die Drehachse (54) und die Mittellinienachse (16) zusammenfallend zu halten;
- die Kippanordnung (20) nach dem Kippschritt entlang des Rückwärtshubs verschiebt.

2. Verfahren nach Anspruch 1, wobei während des Kippschritts ein vernachlässigbarer oder null leerer Raum zwischen der äußeren Oberfläche (6) und der Rückhaltefläche (51) vorhanden ist, um die Hohlräume (5) im Wesentlichen zu schließen.

3. Verfahren nach Anspruch 1 oder 2, wobei die Formen (2) sich nach dem Ende der synchronen Verschiebung von einer Drehvorrichtung (50) der Kippanordnung (20) über eine Transportoberfläche (24) bewegen, während ein Längsabstand zwischen der Drehvorrichtung (50) und der Transportoberfläche (24) konstant gehalten wird.

4. Kippsystem zum Drehen von Formen (2) nach dem Verfahren eines der vorhergehenden Ansprüche; wobei das System aufweist:
- eine feste Struktur (19);
- zwei Transferketten oder Bänder (10), die mit jeweiligen Stiften (11) versehen sind, um die Seiten der Formen (2) zu schieben und um jede Form (2) um eine Mittellinienachse (16) der Form (2) gelenkig zu befestigen; wobei jede Form (2) durch den Schub eines jeweiligen Paars von Stiften (11), die entlang der Mittellinienachse (16) der Form (2) zueinander koaxial sind, entlang eines Wegs (4) transferiert wird;
- eine Kippanordnung (20), die aufweist:
a) einen Rahmen (21), der derart mit der festen Struktur (19) gekoppelt ist, dass er entlang eines geraden Längszweigs (22) des Wegs (4) mit einer Hin- und Herbewegung, die einen Vorwärtshub und einen Rückwärtshub aufweist, beweglich ist;
b) eine Drehvorrichtung (50), die derart mit dem Rahmen (21) gekoppelt ist, dass sie sich um eine Drehachse (54), die orthogonal zu dem Weg (4) ist, dreht, und derart konfiguriert ist, dass sie von den Formen (2) entlang einer kreuzenden Achse (56) gekreuzt wird und jede Form (2) entlang einer Richtung (57), die orthogonal zu der Drehachse (54) und der kreuzenden Achse (54, 56) ist, gekreuzt wird; wobei die Drehvorrichtung (50) wenigstens eine Rückhaltefläche (51) aufweist, die fähig ist, die äußere Oberfläche (6) der Form (2) zu bedecken, die in der Verwendung zumindest während der Drehung an der Drehvorrichtung (50) angreift;
c) wenigstens eine motorisierte Antriebsvorrichtung (66) zum Drehen der Drehvorrichtung (50), wenn von einer Form (2) in die Drehvorrichtung (50) eingegriffen wird und wenn die Mittellinienachse (16) der Form (2) derart ausgerichtet ist, dass sie mit der Drehachse (54) zusammenfällt;
d) wenigstens einen Aktuator (25), der derart gesteuert wird, dass er den Rahmen (21) entlang des geraden Zweigs (22) bewegt und die Drehachse (54) während der Drehung der Drehvorrichtung (50) entlang des Vorwärtshubs mit der Mittellinienachse (16) der Form (2) ausgerichtet hält, während die Form (2) durch das jeweilige Paar von Stiften entlang des geraden Zweigs (22) transferiert wird.

5. System nach Anspruch 4, wobei die Drehvorrichtung (50) zwei Rückhalteflächen (51), die in Bezug auf die Drehachse (54) symmetrisch zueinander sind, aufweist.

6. System nach Anspruch 4 oder 5, wobei der Aktuator (23) derart gesteuert wird, dass er den Rahmen (21) mit der Hin- und Herbewegung entlang des geraden Zweigs (22) bewegt.

7. Entformungsmaschine, die aufweist:
- ein Kippsystem nach einem der Ansprüche 4 bis 6 und
- einen Förderer (25), der unmittelbar laufabwärtig von dem Kippsystem (20) entlang des geraden Zweigs (22) eingerichtet ist und eine obere Transportoberfläche (24) hat, die fähig ist, die entformten Produkte aufzunehmen;
wobei der Rahmen (21) in Horizontalrichtung mechanisch mit einem Rahmenabschnitt (38) des Förderers (25) verbunden ist, so dass sich die Länge der oberen Transportoberfläche (24) ansprechend auf die Verschiebung des Rahmens (21) entlang des geraden Zweigs (22) automatisch ändert.

8. Maschine nach Anspruch 7, wobei der Förderer (25) eine Einstellvorrichtung (34, 35) aufweist, um die Höhenposition des Rahmenabschnitts (38) und/oder der oberen Transportoberfläche (24) zu ändern.

## Revendications

1. Procédé d'inclinaison pour faire tourner des moules (2) dotés de cavités (5) contenant des produits alimentaires, en particulier des produits à base de chocolat, destinés à être démoulés ; lesdites cavités (5) étant formées à une surface externe (6) de chaque moule (2) ; le procédé comprenant les étapes suivantes :
- transfert desdits moules (2) dans une rangée le long d'une trajectoire (4) ;
- inclinaison de chaque moule (2) de 180° par rapport à un système de référence externe fixe, autour d'un axe de rotation (54) orthogonal à ladite trajectoire (4), via un dispositif d'inclinaison (20) ;
dans lequel ladite surface externe (6) est recouverte d'une surface de rétention (51) au cours de l'étape d'inclinaison ;
**caractérisé en ce que**
- chaque moule est transféré le long de ladite trajectoire (4) par la poussée d'une paire respective de broches (11), qui sont coaxiales l'une par rapport à l'autre le long d'un axe central (16) dudit moule (2) ;
- chaque moule (2) peut être mis en rotation par rapport aux broches correspondantes (11) autour de son axe central (16) ;
- ledit dispositif d'inclinaison (20) peut être déplacé le long d'une ramification droite longitudinale (22) de ladite trajectoire (4) avec un mouvement de va-et-vient, comprenant une course vers l'avant et une course vers l'arrière ;
- avant l'étape d'inclinaison, le procédé comprend une étape d'alignement au cours de laquelle le dispositif d'inclinaison (20) se déplace le long de ladite course vers l'avant de manière à faire coïncider ledit axe de rotation (54) avec ledit axe central (16) ;
- l'étape d'inclinaison est effectuée pendant que ledit moule (2) est transféré par ladite paire de broches (11) le long de ladite ramification droite longitudinale (22), et pendant que ledit dispositif d'inclinaison (20) se déplace le long de ladite course vers l'avant de façon synchrone avec lesdites broches (11), afin de maintenir ledit axe de rotation (54) et ledit axe central (16) coïncidents ;
- après l'étape d'inclinaison, le dispositif d'inclinaison (20) se déplace le long de ladite course vers l'arrière.

2. Procédé selon la revendication 1, dans lequel, au cours de l'étape d'inclinaison, un espace vide négligeable ou nul est présent entre ladite surface externe (6) et la surface de rétention (51), de manière à fermer sensiblement lesdites cavités (5).

3. Procédé selon la revendication 1 ou 2, dans lequel, après la fin du déplacement de façon synchrone, les moules (2) se déplacent d'un dispositif de rotation (50) dudit dispositif d'inclinaison (20) sur une surface de transport (24), tandis qu'une distance longitudinale est maintenue constante entre ledit dispositif de rotation (50) et ladite surface de transport (24).

4. Système d'inclinaison pour faire tourner des moules (2) selon le procédé de l'une quelconque des revendications précédentes ; le système comprenant :
- une structure fixe (19) ;
- deux chaînes ou courroies de transfert (10), qui sont dotées de broches respectives (11) permettant de pousser les côtés des moules (2) et d'articuler chaque moule (2) autour d'un axe central (16) dudit moule (2) ; en cours d'utilisation, chaque moule (2) étant transféré le long d'une trajectoire (4) au moyen de la poussée d'une paire respective de broches (11), qui sont coaxiales l'une par rapport à l'autre le long de l'axe central (16) dudit moule (2) ;
- un dispositif d'inclinaison (20) comprenant :
a) un cadre (21) couplé à ladite structure fixe (19) de manière à pouvoir être déplacé le long d'une ramification droite longitudinale (22) de ladite trajectoire (4), avec un mouvement de va-et-vient comprenant une course vers l'avant et une course vers l'arrière ;
b) un dispositif de rotation (50) couplé audit cadre (21) de manière à tourner autour d'un axe de rotation (54) orthogonal à ladite trajectoire (4) et configuré de manière à être traversé par les moules (2) le long d'un axe transversal (56) et de manière à maintenir chaque moule (2) le long d'une direction (57) qui est orthogonale audit axe de rotation (54) et à l'axe transversal (54, 56) ; dans lequel ledit dispositif de rotation (50) comprend au moins une surface de rétention (51) capable de recouvrir la surface externe (6) du moule (2) qui, en cours d'utilisation, s'engage avec ledit dispositif de rotation (50), au moins pendant la rotation ;
c) au moins un dispositif d'entraînement motorisé (66) destiné à faire tourner ledit dispositif de rotation (50) lorsque ledit dispositif de rotation (50) est entraîné par un moule (2) et lorsque l'axe central (16) dudit moule (2) est aligné de manière à coïncider avec ledit axe de rotation (54) ;
d) au moins un actionneur (23) commandé de manière à déplacer ledit cadre (21) le long de ladite ramification droite (22) et à maintenir ledit axe de rotation (54) aligné avec l'axe central (16) dudit moule (2) au cours de la rotation dudit dispositif de rotation (50), le long de la course vers l'avant, tandis que le moule (2) est transféré par la paire respective de broches le long de ladite ramification droite (22).

5. Système selon la revendication 4, dans lequel ledit dispositif de rotation (50) comprend deux surfaces de rétention (51) symétriques l'une vis-à-vis de l'autre par rapport audit l'axe de rotation (54).

6. Système selon la revendication 4 ou 5, dans lequel ledit actionneur (23) est commandé de manière à déplacer ledit cadre (21) selon ledit mouvement de va-et-vient le long de ladite ramification droite (22).

7. Machine de démoulage comprenant :
- un système d'inclinaison selon l'une quelconque des revendications 4 à 6, et
- un convoyeur (25) disposé immédiatement à la suite dudit système d'inclinaison (20) le long de ladite ramification droite (22) et ayant une surface de transport supérieure (24) apte à recevoir les produits démoulés ;
ledit cadre (21) étant mécaniquement lié dans une direction horizontale à une partie du cadre (38) dudit convoyeur (25), de sorte que la longueur de la surface de transport supérieure (24) varie automatiquement en fonction du déplacement dudit cadre (21) le long de ladite ramification droite (22).

8. Machine selon la revendication 7, dans laquelle ledit convoyeur (25) comprend un dispositif de réglage (34, 35) destiné à faire varier la position en hauteur de ladite partie du cadre (38) et/ou de ladite surface de transport supérieure (24).
